# EUROPÄISCHE PATENTSCHRIFT

(11) **EP 1 514 637 B1**
(45) Veröffentlichungstag und Bekanntmachung des Hinweises auf die Patenterteilung: **17.10.2007**
(21) Anmeldenummer: 04019469.8
(22) Anmeldetag: 17.08.2004
(51) Int. Cl.: B23Q 11/10

(54) **Vorrichtung zur Zufuhr von Schmiermitteln für Zerspanwerkzeuge**
Device for supplying lubricant to cutting tools
Dispositif pour alimenter en lubrifiant des outils de coupe

(30) Priorität: 11.09.2003 DE 10341919
(43) Veröffentlichungstag der Anmeldung: 16.03.2005
(73) Patentinhaber: Airbus Deutschland GmbH, 21129 Hamburg (DE)
(72) Erfinder: Urban, Markus, Dipl.-Ing., 21635 Jork (DE); Malischewsky, Jörg, Dipl.-Ing., 76327 Pfinztal (DE)
(74) Vertreter: Klöpper, Ute

(56) Entgegenhaltungen:
- EP-A- 1 172 173
- US-A- 5 890 849

## Beschreibung

Die Erfindung betrifft eine Vorrichtung zur Zufuhr von Schmiermitteln für Zerspanwerkzeuge bei der mechanischen Bearbeitung von Metallen und Kunststoffen unter Verwendung von mobilen, handgeführten und pneumatisch betriebenen Maschinen mit einer Zuführung eines Schmieröl-Druckluft-Gemisches durch im Werkzeug vorhandene Kühlschmierstoffkanäle, vorzugsweise beim Bohren, Reiben oder Senken von Bohrungen mittels einer mobilen Bohrvorschubeinheit im Flugzeugbau, wobei ein Vorratsbehälter für das Schmieröl vorgesehen ist, der im Betriebszustand der Vorrichtung entleert und in ihrem Ruhezustand aufgefüllt wird.

Ein mobiles Präzisions-Bohrgerät zum Festlegen an einer Bohrstelle von großen Werkstücken für Präzisions-Bohrarbeiten mittels eines Werkzeuges ist in der DE 43 39 770 A1 beschrieben, wobei ein flüssiges Schmiermittel bis an die Werkzeugschneiden herangeführt wird. Das Bohrgerät weist eine Werkzeugspindel mit einer Werkzeugaufnahme auf, die mit einem Antrieb zum Drehen und axialen Vorschieben der Werkzeugspindel zusammenwirkt und durch die hindurch der Schmiermittelzufluß erfolgt.

Vorbekannte Geräte mit Bauteilen zur Zuführung von Schmiermitteln besitzen folgende Nachteile:
1. keine ausreichende Funktion, wenn das Zuführsystem Luft enthält,
2. keine ausreichende Dosiereinstellung,
3. Zuführung der Schmiermittel ist nur zyklisch, nicht jedoch kontinuierlich mit konstanten Prozeßparametern möglich,
4. aufwendige Adaption an einige Maschinentypen bzw. eine Adaption ist nicht an allen Maschinen möglich,
5. unterschiedliche Bohr-Reibbedingungen an unterschiedlichen Einsatzorten, und
6. lange Reaktionszeiten bis das Schmiermittel an der Wirkstelle vorhanden ist.

Eine Vorrichtung gemäß dem Oberbegriff des Anspruchs 1 wird im Dokument EP 1172173 beschrieben.

Der Erfindung liegt daher die Aufgabe zugrunde, eine kompakte / miniaturisierte Vorrichtung der eingangs genannten Art mit einer optimierten kontinuierlichen Minimalmengenschmierung aller im Eingriff befindlichen Werkzeugschneiden zu schaffen.

Die Aufgabe wird erfindungsgemäß dadurch gelöst,
- dass die pneumatisch betätigbare Vorrichtung ein Gehäuse aufweist, in welchem ein, einen druckfederbeaufschlagten Kolben enthaltender Vorratstank für das Schmieröl vorgesehen ist, der unterhalb des Kolbens in Nähe seiner zugeordneten Druckfeder eine Eintrittsöffnung für die Druckluft aufweist,
- dass das oberhalb des Kolbens befindliche Tankvolumen über eine Verbindungsleitung und ein an das Gehäuse angeflanschtes 3/2-Wegeventil an eine Druckförderleitung zur Schmierölzufuhr sowie an eine weitere Rohrleitung zur Verbindung mit einem, der Bohrvorschubeinheit vorgeschalteten, mit Druckluft beaufschlagten und an dem Gehäuse befestigten Drosseleinsatz zur Erzeugung des Schmieröl-Druckluft-Gemisches angeschlossen ist, und
- dass das 3/2-Wegeventil im Betriebszustand der Vorrichtung den Weg des Schmieröles aus dem Tankvolumina zum Drosseleinsatz freigibt und nach dem Abschalten der Vorrichtung das Tankvolumen mit der Druckförderleitung zur automatischen Schmierölauffüllung des Tankvolumens verbindet.

Ausgestaltungen der Erfindung sind in den Unteransprüchen 2 bis 4 beschrieben.

Die erfindungsgemäße kompakte / miniaturisierte Vorrichtung zur Öl-Drucktluft-Schmierung von Zerspan-Werkzeugen ist ein Dosiersystem für niedrig- bis mittelviskose Schneidöle im Viskositätsbereich 10 bis ca. 50 mm²/s. Es bildet sich vorteilhafterweise ein Öl-Druckluftgemisch mit einer gleichmäßig degressiven Öl-Förderrate, wobei der Schmiermittelverbrauch - neben dem eingesetzten Schmierstoff - von der Art des installierten Dosiereinsatzes und dem Strömungswiderstand der Zuleitung zum Werkzeug abhängig ist. Es besteht vorteilhafterweise die Möglichkeit der festeingestellten Dosierung, d.h. des Mischverhältnisses von Schmieröl und Druckluft, angepaßt an die jeweilige Maschine-Werkzeug-Kombination durch ein System von Festdrosseln. In bevorzugter Ausgestaltung sind die Festdrosseln als Dosiereinsatz einsetzbar, wobei verschiedene Drosseleinsätze zu verschiedenen Dosiermengen führen, deren Ölmenge und Druckluftmenge jeweils unabhängig beeinflußbar sind. Weitere Vorteile der Erfindung liegen wegen des integrierten Vorratstanks in der autarken und mobilen Einsetzbarkeit und wegen des druckfederbeaufschlagten Kolbens im Vorratstank in der lageunabhängigen Betreibbarkeit der Vorrichtung.

In der Zeichnung ist ein Ausführungsbeispiel nach der Erfindung dargestellt, und zwar zeigt:
- Fig. 1: einen Schaltplan der Rohrleitungen des Schmieröles, der Druckluft und des Schmieröl-Druckluft-Gemisches sowie der Bauelemente der Vorrichtung, und
- Fig. 2: eine Zusammenstellung der Bauelemente einer miniaturisierten Vorrichtung im auseinander gebauten Zustand (Explosionszeichnung) in Vorder-, Seiten- und Draufsicht.

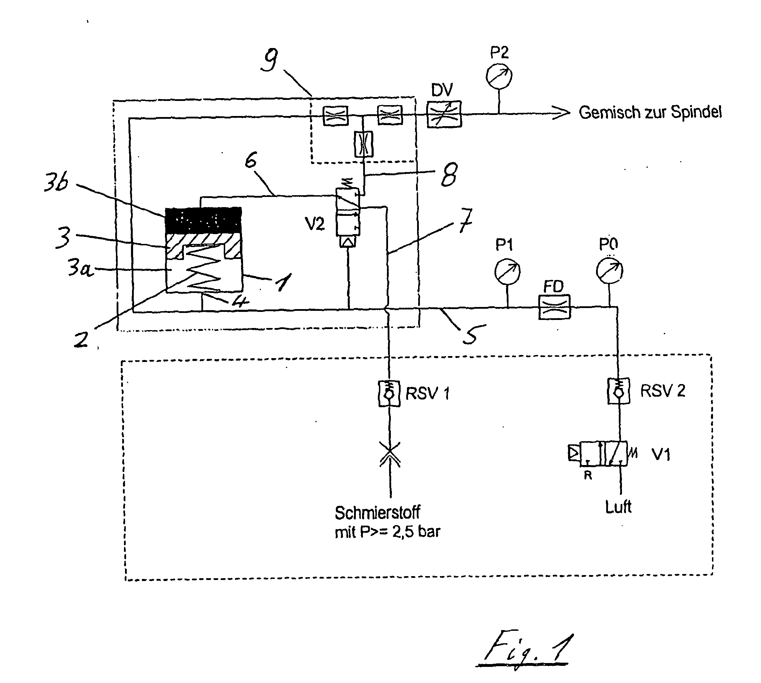

Gemäß Fig. 1 ist ein Vorratstank 1 für das Schmieröl vorgesehen, in dem ein mit einer Druckfeder 2 zusammenwirkender Kolben 3 angeordnet ist. Der Innenraum 3a des Vorratsbehälters 1 unterhalb des Kolbens 3 steht über eine Eintrittsöffnung 4 mit einer Rohrleitung 5 in Verbindung, die über ein Ventil V1, ein Rückschlagventil RSV2 und eine Festdrossel FD (zur Begrenzung des Volumenstromes der Luft vor dem Drosseleinsatz 9) mit Druckluft beaufschlagt wird. Das oberhalb des Kolbens 3 befindliche Tankvolumen 3b enthält das Schmieröl und ist über eine Rohrleitung 6 an ein 3/2-Wegeventil V2 angeschlossen, welches mit der Druckluft-Rohrleitung 5, einer Druckförderleitung 7 mit zugehörigem Rückschlagventil RSV1 für das Schmieröl und über eine weitere Rohrleitung 8 mit einem Drosseleinsatz 9 in Verbindung steht. Das Rückschlagventil RSV1 sperrt den Rückfluss bzw. verhindert das unkontrollierte Ausfließen von Schmieröl, wenn das Tankvolumen 3b mit Schmieröl voll gefüllt ist und die Vorrichtung sich in der Ruhestellung befindet, d.h. wenn die zeichnerisch nicht dargestellte Maschine von der Öl-Förderleitung abgekoppelt ist. Der Drosseleinsatz 9, der vorzugsweise drei Drosseln sowie ein nachgeordnetes Drosselventil DV aufweist, ist auch an die Druckluft-Rohrleitung 5 angeschlossen und dient zur Vermischung der Druckluft mit dem Schmieröl sowie zur Weiterleitung des Schmieröl-Druckluft-Gemisches an die Kühlmittelkanäle des zeichnerisch nicht dargestellten Werkzeuges.

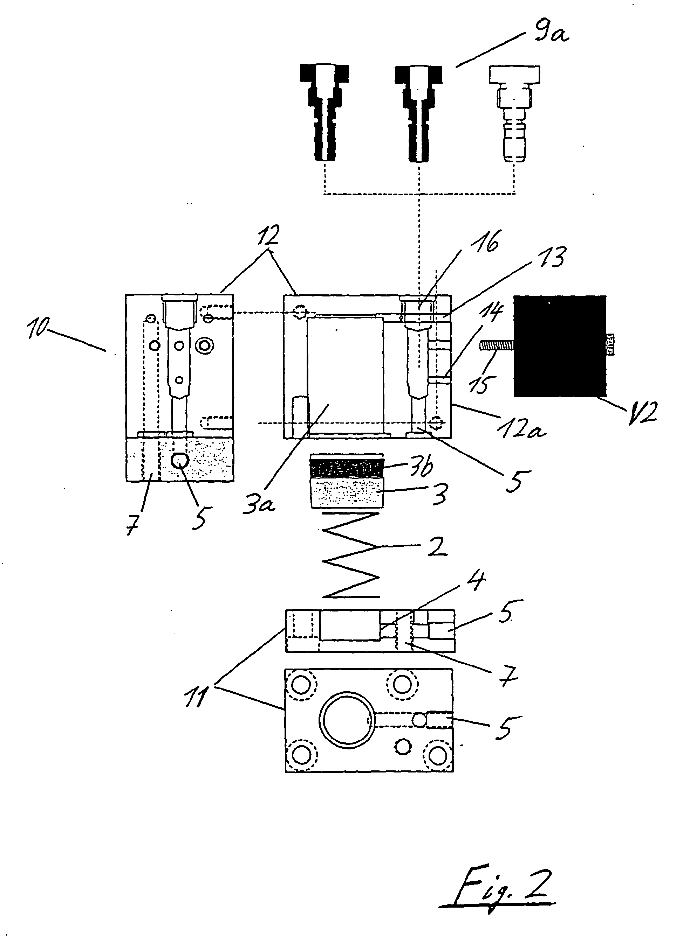

Wie aus Fig. 2 zu ersehen ist, weist die kompakte pneumatisch betätigbare Vorrichtung ein Gehäuse 10 auf, in welchem ein, einen druckfederbeaufschlagten Kolben 2, 3 enthaltender Vorratstank 1 für das Schmieröl vorgesehen ist. Das Gehäuse 10 besteht aus einem Gehäuseunterteil 11 und einem Gehäuseoberteil 12, wobei das Gehäuseunterteil 11 die Eintrittsöffnung 4 des Vorratstanks 1 für die Druckluft enthält. Das Gehäuseoberteil 12 ist mit dem Tankvolumen 3b des Vorratstanks 1 für das Schmieröl, einen Kanal 13 zwischen Vorratstank 1 und dem 3/2-Wegeventil V2 sowie einem Seitenkanal 14 versehen. Hierbei ist das 3/2-Wegeventil V2 mit einer Gewindeschraube 15 an einer Seitenwandung 12a des Gehäuseoberteiles 12 befestigt. Die mit 16 bezeichnete Gehäuseaustrittsöffnung dient zum Anschluß eines Drosseleinsatzes, wobei in Fig. 2 beispielsweise drei zylinderförmige Drosseleinsätze 9a dargestellt sind. Durch die Verwendung von verschiedenen Dosiereinsätzen 9a sind unterschiedliche Dosierungen mit von einander unabhängig beeinflußbaren Schmieröl- und Druckluftmengen herstellbar.

Zur Erzeugung des Schmieröl-Druckluft-Gemisches ist das oberhalb des Kolbens 3 befindliche Tankvolumen 3a über die Verbindungsleitung 6 an das 3/2-Wegeventil (V2) und über die Rohrleitung 8 mit dem, einer zeichnerisch nicht dargestellten Bohrvorschubeinheit vorgeschalteten, mit Druckluft beaufschlagten und an dem Gehäuse 10 befestigten Drosseleinsatz 9 angeschlossen. Im Betriebszustand der Vorrichtung gibt somit das 3/2-Wegeventil V2 den Weg des Schmieröles aus dem Tankvolumen 3b zum Drosseleinsatz 9 frei. Nach dem Abschalten der Vorrichtung ist das Tankvolumen 3b über das 3/2-Wegeventil V2 mit der Druckförderleitung 7 zur automatischen Schmierölauffüllung des Tankvolumens 3b verbunden.
- 1: Vorratstank für das Schmieröl
- 2: Druckfeder im Vorratstank 1
- 3: Kolben des Vorratstanks 1
- 3a: Innenraum des Vorratstanks 1
- 3b: Tankvolumen des Vorratstanks 1
- 4: Eintrittsöffnung für die Druckluft des Vorratstanks 1
- 5: Rohrleitung für Druckluft
- 6: Rohrleitung zwischen Tankvolumen 3b und 3/2-Wegeventil V2
- 7: Druckförderleitung für Schmieröl
- 8: Rohrleitung zwischen 3/2-Wegeventil V2 und Drosseleinsatz 9
- 9: Drosseleinsatz mit drei Drosseln
- 9a: zylinderförmige Drosseleinsätze

- 10: Gehäuse
- 11: Gehäuseunterteil
- 12: Gehäuseoberteil
- 12a: Seitenwandung des Gehäuseoberteils 12
- 12: Kanal zwischen Tankvolumen 3b und 3/2-Wegeventil V2
- 13: Seitenkanal im Gehäuseoberteil 12
- 15: Gewindeschraube des 3/2-Wegeventils V2
- 16: Gehäuseaustrittsöffnung

- FD: Festdrossel
- RSV1: Rückschlagventil
- RSV2: Rückschlagventil
- V1: Druckluft-Ventil
- V2: 3/2-Wegeventil
- DV: Drosselventil

## Patentansprüche

1. Vorrichtung zur Zufuhr von Schmiermitteln für Zerspanwerkzeuge bei der mechanischen Bearbeitung von Metallen und Kunststoffen unter Verwendung von mobilen, handgeführten und pneumatisch betriebenen Maschinen mit einer Zuführung eines Schmieröl-Druckluft-Gemisches durch im Werkzeug vorhandene Kühlschmierstoffkanäle, vorzugsweise beim Bohren, Reiben oder Senken von Bohrungen mittels einer mobilen Bohrvorschubeinheit im Flugzeugbau, wobei ein Vorratsbehälter für das Schmieröl vorgesehen ist, der im Betriebszustand der Vorrichtung entleert und in ihrem Ruhezustand aufgefüllt wird,
- wobei die Vorrichtung pneumatisch betätigbar ist und ein Gehäuse (10) aufweist, in welchem ein, einen druckfederbeaufschlagten Kolben (2,3) enthaltender Vorratstank (1) für das Schmieröl vorgesehen ist, der unterhalb des Kolbens (3) in Nähe seiner zugeordneten Druckfeder (2) eine Eintrittsöffnung (4) für die Druckluft aufweist,
**dadurch gekennzeichnet**
- **dass** das oberhalb des Kolbens (3) befindliche Tankvolumen (3a) über eine Verbindungsleitung (6) und ein an das Gehäuse (10) angeflanschtes 3/2-Wegeventil (V2) an eine Druckförderleitung (7) zur Schmierölzufuhr sowie an eine weitere Rohrleitung (8) zur Verbindung mit einem, der Bohrvorschubeinheit vorgeschalteten, mit Druckluft beaufschlagten und an dem Gehäuse (10) befestigten Drosseleinsatz (9) zur Erzeugung des Schmieröl-Druckluft-Gemisches angeschlossen ist, und
- **dass** das 3/2-Wegeventil (V2) im Betriebszustand der Vorrichtung den Weg des Schmieröles aus dem Tankvolumen (3b) zum Drosseleinsatz (9) freigibt und nach dem Abschalten der Vorrichtung das Tankvolumen (3b) mit der Druckförderleitung (7) zur automatischen Schmierölauffüllung des Tankvolumens (3b) verbindet.

2. Vorrichtung nach Anspruch 1, **gekennzeichnet durch** ein aus einem Gehäuseunterteil (11) und einem Gehäuse oberteil (12) bestehendem Gehäuse (10), wobei das Gehäuseunterteil (11) Eintrittsöffnungen für das Schmieröl und die Druckluft enthält und das Gehäuseoberteil (12) den Vorratstank (1), das 3/2-Wegeventil (V2) sowie den Drosseleinsatz (9) aufweist.

3. Vorrichtung nach Anspruch 1 oder 2, **dadurch gekennzeichnet, dass** das 3/2-Wegeventil (V2) an einer Seitenwandung (12a) des Gehäuseoberteiles (12) befestigt ist.

4. Vorrichtung nach Anspruch 1, 2 oder 3, **dadurch gekennzeichnet, dass** im Betriebszustand der Vorrichtung der Förderdruck des Schmieröles zum Drosseleinsatz (9) um den Betrag der Federkraft der Druckfeder (2) oberhalb des Druckes der Druckluft liegt.

## Claims

1. Device for supplying lubricants for cutting tools during the machining of metals and plastics using mobile, hand-held and pneumatically-operated machines with a supply of a lubricant-air mixture through cooling lubricant channels present in the tool preferably during the drilling, reaming or countersinking of bores by means of a mobile drill feed unit in aircraft construction, wherein a reservoir is provided for the lubricant which is emptied in the operating state of the device and is filled in the idle state thereof
- wherein the device is pneumatically operable and comprises a housing (10) in which a storage tank (1) containing a compression-spring-loaded piston (2,3) for the lubricant is provided, with, underneath the piston (3) in the proximity of its assigned compression spring (2), said tank comprising an inlet port (4) for the compressed air
**characterised in that**
- the tank volume (3a) disposed above the piston (3) is connected via a connecting line (6) and a 3/2 directional control valve (V2) flanged to the housing (10) to a pressure delivery line (7) for supplying lubricant and to a further pipeline (8) for connection to a compressed air-driven throttling unit (9) which is downstream of the drill feed unit and attached to the housing (10) for the generation of the lubricant-compressed-air mixture and
- that, in the operating state of the device, the 3/2 directional control value (V2) releases the route for the lubricant from the tank volume (3b) to the throttling unit (9) and when the device is switched off connects the tank volume (3b) to the pressure delivery line (7) for the automatic filling of the tank volume (3b) with lubricant.

2. Device according to claim 1, **characterised by** a housing (10) comprising a lower housing section (11) and a upper housing section (12), wherein the lower housing section (11) contains inlet ports for the lubricant and the compressed air and the upper housing section (12) comprises the storage tank (1), the 3/2 delivery control value (V2) and the throttling element (9).

3. Device according to claim 1 or claim 2, **characterised in that** the 3/2 delivery control valve (V2) is attached to a side wall (12a) of the upper housing section (12).

4. Device according to any one of claims 1, 2 or 3, **characterised in that**, in the operating state of the device, the delivery pressure of the lubricant to the throttling element (9) exceeds the pressure of the compressed air by the value of the spring force of the compression spring (2).

## Revendications

1. Dispositif pour amener des lubrifiants destinés à des outils de coupe lors de l'usinage mécanique de métaux et de matières plastiques utilisant des machines mobiles, ces machines étant guidées à la main et entraînées pneumatiquement, le dispositif comportant une amenée d'un mélange d'huile lubrifiante et d'air comprimé à travers des canaux pour lubrifiant de refroidissement présents dans l'outil, de préférence lors du perçage, de la friction ou du chanfreinage de trous au moyen d'une unité d'avance de perçage mobile, dans la construction aéronautique, dans lequel un réservoir qui se vide lorsque le dispositif est en service et se remplit lorsqu'il est à l'arrêt, est prévu pour l'huile lubrifiante,
- dans lequel le dispositif peut être actionné pneumatiquement et comporte un boîtier (10) dans lequel un réservoir (1) contenant un piston (2, 3) contraint par un ressort à pression est prévu pour l'huile lubrifiante, lequel réservoir (1) comporte une ouverture d'entrée (4) pour l'air comprimé, en-dessous du piston (3) à proximité de son ressort à pression (2) correspondant,
**caractérisé en ce**
- **que** le volume de réservoir (3a) se trouvant au-dessus du piston (3) est raccordé, par l'intermédiaire d'une ligne de liaison (6) et d'une vanne 3/2 voies (V2) bridée sur le boîtier (10), à une conduite de refoulement d'huile lubrifiante (7) ainsi qu'à une autre conduite (8), aux fins de liaison avec un insert d'étranglement (9) destiné à générer le mélange huile lubrifiante / air comprimé, monté en amont de l'unité d'avance de perçage, contraint par de l'air comprimé et fixé sur le boîtier (10), et
- **que**, lorsque le dispositif est en service, la vanne 3/2 voies (V2) libère le passage de l'huile lubrifiante du volume de réservoir (3b) vers l'insert d'étranglement (9) et une fois le dispositif éteint, relie le volume de réservoir (3b) à la conduite de refoulement sous pression (7) aux fins de remplissage automatique du volume de réservoir (3b) en huile lubrifiante.

2. Dispositif selon la revendication 1, **caractérisé par** un boîtier (10) constitué d'une partie de boîtier inférieure (11) et d'une partie de boîtier supérieure (12), dans lequel la partie de boîtier inférieure (11) comporte des ouvertures d'entrée pour l'huile lubrifiante et l'air comprimé et la partie de boîtier supérieure (12) comporte le réservoir (1), la vanne 3/2 voies (V2) ainsi que l'insert d'étranglement (9).

3. Dispositif selon la revendication 1 ou 2, **caractérisé en ce que** la vanne 3/2 voies (V2) est fixée sur une paroi latérale (12a) de la partie de boîtier supérieure (12).

4. Dispositif selon la revendication 1, 2 ou 3, **caractérisé en ce que** lorsque le dispositif est en service, la pression de refoulement de l'huile lubrifiante vers l'insert d'étranglement (9) est supérieure, sous l'ampleur de la force de ressort du ressort à pression (2), à la pression de l'air comprimé.
